Europäisches Patentamt

European Patent Office

Office européen des brevets

(19)

(11) Publication number: 0 485 766 A2

# EUROPEAN PATENT APPLICATION

(12)

(21) Application number: 91117948.9

(22) Date of filing: 22.10.91

(51) Int. Cl.⁵: G06F 15/72

(30) Priority: 06.11.90 US 609699

(43) Date of publication of application:
20.05.92 Bulletin 92/21

(84) Designated Contracting States:
BE CH DE FR GB IT LI NL SE

(71) Applicant: BIOMECHANICS CORPORATION OF AMERICA
1800 Walt Whitman Road
Melville, New York 11747(US)

(72) Inventor: Gross, Clifford
1675 Northern Blvd.
Roslyn, New York 11576(US)

(74) Representative: Dipl.-Ing. H. Hauck, Dipl.-Ing. E. Graalfs, Dipl.-Ing. W. Wehnert, Dr.-Ing. W. Döring
Mörikestrasse 18
W-4000 Düsseldorf 30(DE)

(54) Anthropometric computer aided design method and system.

(57) A computer aided design method and system for displaying and manipulating an image of all or part of a human body is disclosed. To display an image in accordance with the invention an electronic memory stores data representing in an anthropometrically accurate manner each of a plurality of segments of a human body as a polyhedron having vertices whose coordinates are measured with respect to a joint center point. This data is then used by a graphical display device to display an anthropometrically correct image of one or more segments of a body, each displayed segment being displayed as a polyhedron. By applying rotational, translational or scaling transformations to the coordinates describing the vertices of the polyhedrons, it is possible to manipulate the corresponding graphical image of particular body segments.

FIG. 1

The present invention relates to a computer aided design (CAD) method and system which displays and manipulates anthropometrically correct images of human beings. By displaying an anthropometrically correct image of a human being along with an object being designed, the inventive method and system allows a user to determine how an actual human will interact with an object without actually having to build the object. In other words, the present invention permits CAD systems used in product design work to simulate the human interface with a product or workstation being designed.

CAD systems are generally utilized for the display of three dimensional objects and scenes. For example, a CAD system allows a user to display and manipulate three dimensional models of objects such as machine components, automobile bodies, and aircraft parts. Such CAD models usually have enough realism to enable a designer to evaluate the design of a product based on CAD system displays. Such evaluation may be based on the aesthetic or functional characteristics of a product. For example, a designer of a car body is concerned with both the appearance and aerodynamic properties of the body.

A primitive representation which can be utilized by a CAD system to build models of objects is the polyhedron. This permits the modeling of simple objects through the use of cubes, parallelepipeds, wedges and polygonal prisms all of which have a relatively small number of faces. By increasing the number of faces, a polyhedron can be constructed that will approximate any solid object. This completeness property makes the polyhedron particularly attractive as a primitive representation. An arbitrary polyhedron can be described by defining its faces. Each face is a planar polygon that can be described by an ordered listing of the vertices of the polygon or by an equivalent list of the edges. For example, to represent a coffee cup in this manner, a polyhedron with 1000 faces may be utilized.

A polyhedron representation of an object is therefore defined by storing in a memory a list of vertices, each of which is a point on the surface of an object, and information as to how the vertices are to be connected to form the faces of the polyhedron. This information is then used to display on a display device the polyhedron representation of the object. This image can then be manipulated in a variety of different ways by applying rotational, translational, and scaling transformations to the vertex coordinates. For example, a CAD image displayed using a polyhedron representation can be rotated in space or scaled or translated along a given dimension. In addition, the viewer can choose the angle from which the object is viewed on the CAD system display device. Other capabilities of CAD systems include hidden surface elimination, and shading.

The foregoing described capabilities are found in many commercially available CAD systems. Some examples of commercially available CAD systems include AutoCAD and VersaCAD. Mathematical algorithms for manipulating (i.e. scaling, rotating, translating or changing the viewing angle of) polyhedron representations of actual objects are disclosed in William M. Newman et al, "Principles of Interactive Computer Graphics", McGraw Hill Book Company, 1979.

Conventional CAD systems typically display realistic representations of various objects such as automobile bodies, automobile dashboards, and automobile seats. The CAD display representations of these objects are realistic enough so that designers can evaluate the designs from the CAD representations. However, conventional CAD systems have a serious shortcoming in that they do not have the capability of simulating the human interface with the object being designed. The reason is that conventional CAD systems do not have the capability of displaying and manipulating anthropometrically accurate images of human bodies. By anthropometrically accurate it is meant that the image of the body has a sufficient number of segments which are movable about axes extending through corresponding joint points, that the shapes of the segments in the image accurately approximate the shapes of the corresponding real body segments, and that the movement of the segments relative to the joint points is subject to human body functional limitations.

For example, the "Sammie" program developed by the University of Nottingham in England and previously offered for sale by Prime Computer, Inc. is a CAD program which is intended to enable a designer to simulate the interaction of a human being with an object. However, the "Sammie" program suffers from a number of shortcomings. First, the human bodies displayed by the "Sammie" program are not sufficiently accurate anthropometrically to realistically simulate movements of the human body or interactions of the human body with an object. In particular, the body images do not include enough body segments movable about corresponding joint points. In addition, the "Sammie" program does not utilize a polyhedron representation of the shapes of the various segments of a human body. Furthermore, the "Sammie" program does not include a detailed model of the human hand including all joints, thereby making it difficult or impossible for the "Sammie" program to simulate in a detailed way the interaction of a human hand with an object.

Other programs which display images of human bodies include "Combiman" and "Cruchief" developed by the Air Force Medical Research Laboratory at Wright Patterson Air Force Base. However, these programs displayed only simple line drawings of human bodies rather than anthropometrically correct images.

To show how important it is for a CAD system to display anthropometrically correct images of human bodies consider the following examples. To determine if a figure can fit in a tunnel it is only necessary for the CAD system to display a stick figure because all that matters is the height of the Figure. On the other hand, consider the design of a jackhammer. To design a jackhammer, it is necessary to know in a detailed manner the posture that a worker will have to assume to use the jackhammer. For this application an anthropometrically correct image which accurately simulates both the shape and functional limitations of the human body segments is needed.

Accordingly, it is an object of the present invention to provide a computer aided design method and system which can display human body images which accurately incorporate human anthropometry and functional limitations. More particularly, it is an object of the invention to provide a method and system for displaying a human body in an anthropometrically correct manner by using a polyhedron representation of a plurality of portions or segments of a human body. It is a further object of the invention to provide a CAD method which can manipulate such figures having human anthropometry to simulate the fit and interaction between a human and an object being designed without actually having to build the object. It is also an object of the invention to provide a computer aided design method and system for displaying and manipulating anthropometrically correct and fully articulated images of the human hand.

The present invention is a computer aided design method and system for displaying and manipulating anthropometrically correct images of human beings.

Illustratively, the computer aided design system of the present invention comprises a central processing unit, an electronic memory, a graphic display device in communication with the central processing unit, and one or more I/O devices in communication with the central processing unit.

In accordance with the invention, the electronic memory is utilized to store a data base. The data base includes data for digitally representing the shape of a plurality of body segments. An example of a body segment is the upper arm whose joint center point is the shoulder and which extends to the elbow. Attached to the upper arm is another segment, the lower arm. This latter body segment has a joint center point at the elbow and extends to the wrist. Illustratively, a human body is divided into 46 such body segments including sixteen body segments for each hand.

Each body segment is represented in the data base as a polyhedron. More particularly, each body segment is represented in the data base as a set of vertices whose coordinates are measured with respect to the corresponding joint center point and an index order which indicates how the vertices are connected to one another to form the faces of the corresponding polyhedron. In addition to storing the above-described digital representation of each polyhedron, the data base may also include some other information such as limitations on the angles through which body segments can rotate about their joint center points.

It is an important feature of the present invention that the data representing each body segment is anthropometrically correct. Such anthropometrically correct data can be generated by electronically digitizing the individual segments of an anthropometrically correct human body form. Illustratively, a sonic digitizer is used for electronically digitizing each body segment.

The above-described data is stored in an electronic memory and utilized by a central processing unit to display on a graphic display device an anthropometrically correct image of one or more body segments, each of the displayed body segments being displayed as a polyhedron.

It is also an important feature of the present invention that the image of the one or more body segments on the graphical display device can be manipulated. Such manipulation can be utilized for example to simulate the interaction between a human body or portion thereof and an object displayed on the graphical display device without actually building the object. This manipulation may be accomplished by utilizing the central processing unit to apply rotational, translational or scaling transformations to the coordinates of the vertices representing particular body segments to rotate, translate, or scale an image of this segment. For example, by applying an appropriate sequence of transformations, an image of the human body can be manipulated into a sitting posture and then by applying a further sequence of transformations, the arm of the body can be caused to reach out towards an object thereby determining if the object is reachable from the sitting position. Because the digital representation of each body segment is anthropometrically correct, it is possible to realistically simulate the interaction of the human body with the object.

It is a further important feature of the present invention, that the electronic memory stores a detailed digital representation of the two hands of a human body. Illustratively, each of sixteen body segments of a hand (three segments for each of five fingers and a palm segment connecting the wrist to the innermost joint of each finger) is represented as a polyhedron in terms of a joint center point and vertices whose coordinates are measured relative to the appropriate joint center point. This data can be utilized in the inventive CAD system to display detailed anthropometrically correct images of the human hand and to manipulate these images by applying transformations to the coordinates of the vertices of the polyhedrons representing the segments of the hand.

FIG 1 schematically illustrates a computer aided design system in accordance with an illustrative embodiment of the present invention.

FIGs 2A and 2B illustrate images of the human body which can be displayed using the system of FIG 1.

FIG 3 illustrates the organization of a data base stored in a memory in the system of FIG 1.

FIG 4 is a flowchart illustrating an electronic data processing method for displaying an image of a human body using the system of FIG 1.

FIG 4A illustrates an image of a human body displayed through use of the process of FIG 4.

FIG 5 is a flowchart illustrating an electronic data processing method for manipulating the image of FIG 4A.

FIG 5A shows the image of FIG 4A after it has been manipulated in accordance with the process of FIG 5.

FIG 6 illustrates an electronic data processing method for causing a display of a human body to simulate walking.

FIGs 7 and 7A illustrate an electronic data processing method for simulating graphically the interaction of an image of a human body and an object.

FIG 8 is an image of a human hand displayed using the system of FIG 1.

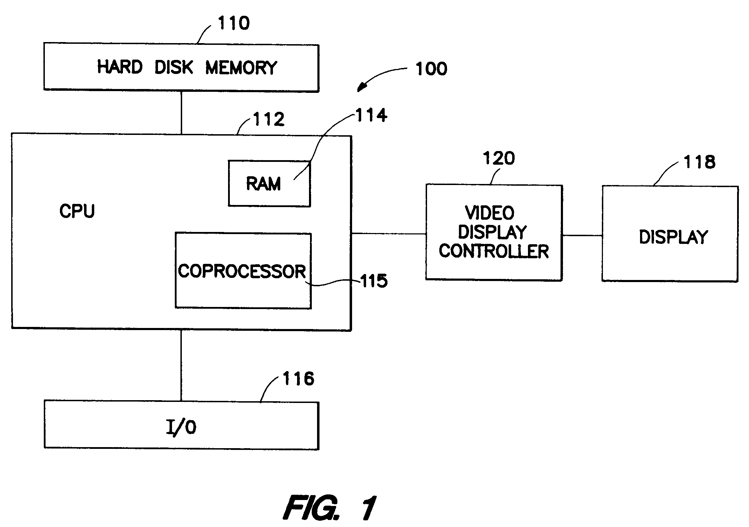

FIG 1 schematically illustrates a computer aided design system 100 in accordance with an illustrative embodiment of the present invention. The system 100 comprises a central processing unit (CPU) 112. The central processing unit 112 typically includes some local random access memory (RAM) 114 and may also include a math co-processor 115 because of the many mathematical calculations which are required to display CAD images. Connected to the central processing unit 112 is a hard disk memory 110. The system 100 includes one or more I/O devices 116 which may be in the form of a keyboard or a mouse. Furthermore, the system 100 includes a graphics display device 118 and a video display controller 120 for interfacing the display 118 with the central processing unit 112. Illustratively, the system 100 may be implemented in the form of a stored program machine such as a desktop personal computer.

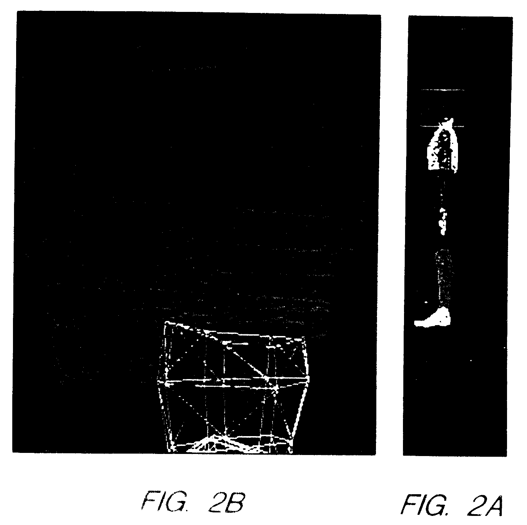

As indicated above, the purpose of the inventive CAD method and system is to display on the graphics display device anthropometrically accurate images of all or part of a human body and to manipulate these images. At the outset, before describing in detail the method used to form anthropometrically accurate images on the display 118 of FIG 1, it is useful to provide one example of such an image. FIG 2A shows an anthropometrically correct image of a human body. In FIG 2A, the image of the human body is formed from sixteen body segments. The body segments are as follows:

 0. chest
 1. neck
 2. left upper arm
 3. right upper arm
 4. abdomen
 5. left upper leg
 6. right upper leg
 7. left lower arm
 8. right lower arm
 9. left lower leg
 10. right lower leg
 11. left foot
 12. right hand
 13. left hand
 14. right hand
 15. head.

Each of these body segments is formed in FIG 2A as a polyhedron. Since the polyhedron nature of the individual body segments is not entirely clear from FIG 2A, FIG 2B is a blowup of the portion of FIG 2A shown in the box, i.e., the head and neck segments. From FIG 2B it is clear how each body segment is formed as a polyhedron. As is described below, the segments are rotatable about joint center points. For example, the joint center point of the upper arm is the shoulder and the joint center point of the lower arm is the elbow.

It should be noted that in addition to the body segments listed above, each hand itself may be represented by sixteen such segments so that there is a total of forty-six segments for the human body. This permits the inventive CAD method and system to display fully articulatable anthropometrically correct images of the human hand. However, for images which involve the whole body it is often necessary to only consider the sixteen body segments identified above.

As indicated above, the present invention is directed to a method for displaying and manipulating anthropometrically correct images of all or part of a human body. The electronic processing steps utilized by the computer system 100 of FIG 1 to display and manipulate such images are described in detail below.

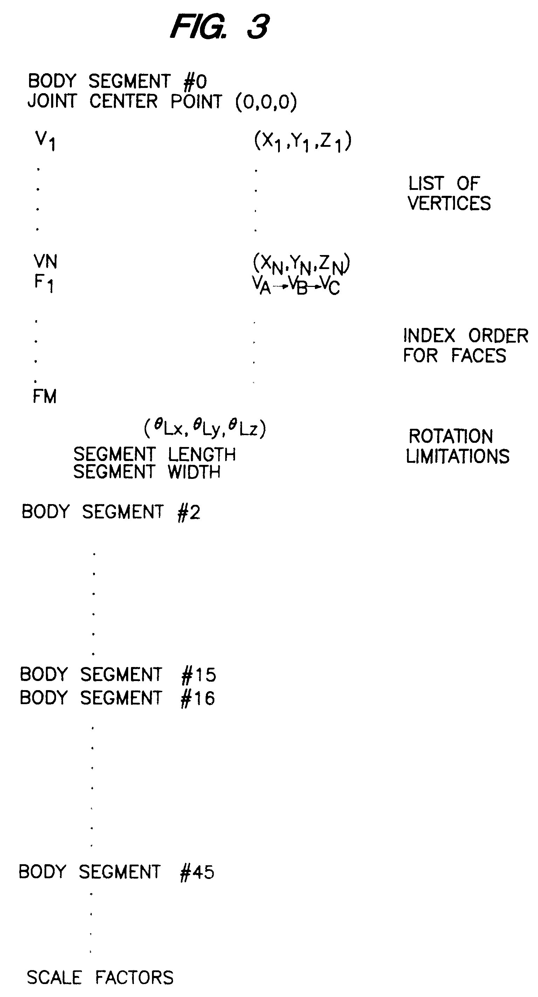

To display and manipulate anthropometrically accurate images of human beings, certain data is stored in the hard disk memory 110 of FIG 1. The organization of this data is schematically illustrated in FIG 3.

As shown in FIG 3, each of the body segments 0 through 15 or 0 through 45 (where 0-15 are the body segments identified above and segments 16-45 are the remaining segments for the left and right hand, i.e., three segments for each of five fingers on each hand and one palm segment for each hand) is electronically represented as a polyhedron. To electronically represent each segment as a polyhedron, a joint center point is defined for each segment. The joint center point of a segment corresponds to the anatomical point at which the segment rotates. The joint center point serves as a local origin for its particular body segment so that the coordinates of a joint center point are (0,0,0). For each body segment a set of vertices $V_1..,V_N$ is stored. The coordinates of these vertices (x,y,z) are measured in a local coordinate system in which the corresponding joint center point is the local origin. Also stored for each body segment is an index order. Illustratively, a polyhedron comprises a set of faces $F_1...F_M$ which are formed by connecting vertices. Each of the faces $F_1 \bullet ..F_M$ of a segment is formed by connecting the vertices listed in the order indicated.

In addition, each body segment is rotatable about one or more axes which pass through its joint center point. However, in a real human body there are known biological limitations on the angles through which body segments may be rotated. These angular limitations $(\theta_{Lx},\theta_{Ly},\theta_{Lz})$ for each of three mutually perpendicular axes are also contained in the data for each segment.

In addition, for each body segment its length (e.g., the distance between adjacent joint center points) and the width are stored.

The foregoing data is stored for each of the body segments 0-15 and may also be stored for the body segments 16-45 if it is desired to form detailed anthropometrically correct images of a human hand.

To insure that the segments of the body are connected together properly to form an image, the joint center point of a segment coincides with a vertex of another segment to which it is connected. For example, the joint center point of the right upper arm coincides with one vertex of the chest and the joint center point of the right lower arm coincides with one vertex of the upper arm.

The data stored in the hard disk memory also includes scale factor information. The scale factor information is used for the following purpose. In a typical implementation of the invention, the hard disk memory 110 stores the data of FIG 3 for two bodies, a 50 percentile American male and a 50 percentile American women. However, in many applications it will be desirable to display a body which has the proportions characteristic of another ethnic group or the body of an American person from a different percentile. To display such images of other persons it is desirable to store in the hard disk memory the scale factor information. The scale factor information comprises the length and width of the body segments of the various other ethnic groups and percentile ranges. These lengths and widths can be compared with the lengths and widths of the corresponding body segments stored in the memory to obtain scale factors which are used to scale the coordinates of the vertices of the individual body segments so that they have shapes proportionate to the shapes of the body segments of the various ethnic groups and percentiles. The lengths and widths of the body segments of the various ethnic groups and percentiles is obtained from generally known biological information.

To obtain the data used to model each of the body segments of a human body, in accordance with the data described above in connection with FIG 3, an approximately 50% dummy such as a CPR dummy from the Red Cross is utilized. This body is taken apart at each joint leaving a plurality of body segments. Each segment was attached to the adjacent segment by a screw. The location of the screw forms the joint center point of the corresponding body segment.

After the dummy is taken apart, contours are drawn separately on each body segment. Illustratively, the contours are drawn with quarter inch wide tape which is wrapped around each body segment longitudinally and laterally to form a grid of intersecting points on the surface of each body segment (for the hand segments, a narrower tape or string can be utilized). The locations of the intersecting points are the

EP 0 485 766 A2

locations of the vertices in a polyhedral representation of the body segment. A sufficient number of contours are utilized for each body segment so that the resulting polyhedron accurately reflects the shape of a body segment. For example, for an upper arm the number of vertex points is approximately 45, and for the head the number of vertex points is approximately 40.

After the intersecting points on all the body segments are obtained the body is digitized. Illustratively, a commercially available sonic digitizer such as the SAC GP8-3d sonic digitizer is used for this purpose. The sonic digitizer hardware comprises a probe and four microphones. The microphones are arranged in a square array.

Each body segment to be digitized is mounted under the microphone array in a position such that all the intersection points in the contour grid are accessible to the probe. The probe tip is placed at each intersection point and a button is pressed so that a spark is emitted. The spark is picked up by at least three of the microphones. The amount of time the sound of a spark takes to reach each of the three microphones is determined and then a triangulation procedure is utilized to determine the location of the intersection point, which location is stored in and displayed by a computer. After all the points on a body segment are digitized in this manner, the points or vertices are connected by lines to form a polyhedron. The order in which the points are connected becomes the index order data described above in connection with FIG 3. In addition, the coordinates of all the vertices are translated so that the coordinate values are measured relative to a joint center point as indicated above.

After all the body segments are digitized in this manner the body is pieced back together on the computer screen, i.e., the joint center point of each segment is positioned so that it coincides with an appropriately located vertex of an adjacent segment.

As indicated above, an important aspect of the present invention is the manipulation of the anthropometrically correct images of human body segments. This is accomplished by transforming the coordinates describing the locations of the vertices of the polyhedrons. The transformations are as follows.

A transformation which translates a point (x,y,z) to a new point (x',y',z') is

$$
[x'\,y'\,z'\,1] = [x\ y\ z\ 1]
\begin{bmatrix}
1 & 0 & 0 & 0 \\
0 & 1 & 0 & 0 \\
0 & 0 & 1 & 0 \\
T_x & T_y & T_z & 1
\end{bmatrix}
\tag{1}
$$

where $T_x$, $T_y$ and $T_z$ are the components of the translation in the x, y, and z directions.

Rotations can be around any of three mutually perpendicular axes. The transformation for a rotation $\theta_x$ around the X axis is

$$
[x'\,y'\,z'\,1] = [x\ y\ z\ 1]
\begin{bmatrix}
1 & 0 & 0 & 0 \\
0 & \cos\theta_x & -\sin\theta_x & 0 \\
0 & \sin\theta_x & \cos\theta_x & 0 \\
0 & 0 & 0 & 1
\end{bmatrix}
\tag{2}
$$

The transformation for a rotation $\theta_y$ around the Y coordinate axis is

6

$$[x'\,y'\,z'\,1] = [x\,y\,z\,1]\begin{bmatrix} \cos\theta_y & 0 & \sin\theta_y & 0 \\ 0 & 1 & 0 & 0 \\ -\sin\theta_y & 0 & \cos\theta_y & 0 \\ 0 & 0 & 0 & 1 \end{bmatrix} \quad (3)$$

The transformation for a rotation $\theta_z$ around the Z coordinate axis is

$$[x'\,y'\,z'\,1] = [x\,y\,z\,1]\begin{bmatrix} \cos\theta_z & -\sin\theta_z & 0 & 0 \\ \sin\theta_z & \cos\theta_z & 0 & 0 \\ 0 & 0 & 1 & 0 \\ 0 & 0 & 0 & 1 \end{bmatrix} \quad (4)$$

In addition, a scaling transformation can be used to scale dimensions in each coordinate direction. The transformation is

$$[x'\,y'\,z'\,1] = [x\,y\,z\,1]\begin{bmatrix} S_x & 0 & 0 & 0 \\ 0 & S_y & 0 & 0 \\ 0 & 0 & S_z & 0 \\ 0 & 0 & 0 & 1 \end{bmatrix} \quad (5)$$

where $S_x$, $S_y$, and $S_z$ are the scale factors along the x, y, z directions.

The algorithms carried by the central processing unit to display and manipulate human body images are now described. The algorithms described below are illustrative only and numerous alternate algorithms for displaying and manipulating human body images may be developed by those skilled in the art. The algorithms utilized in accordance with the present invention are compact and require only modest amounts of memory. Thus the inventive CAD system and method is especially suitable for use with a PC and other desktop computer systems.

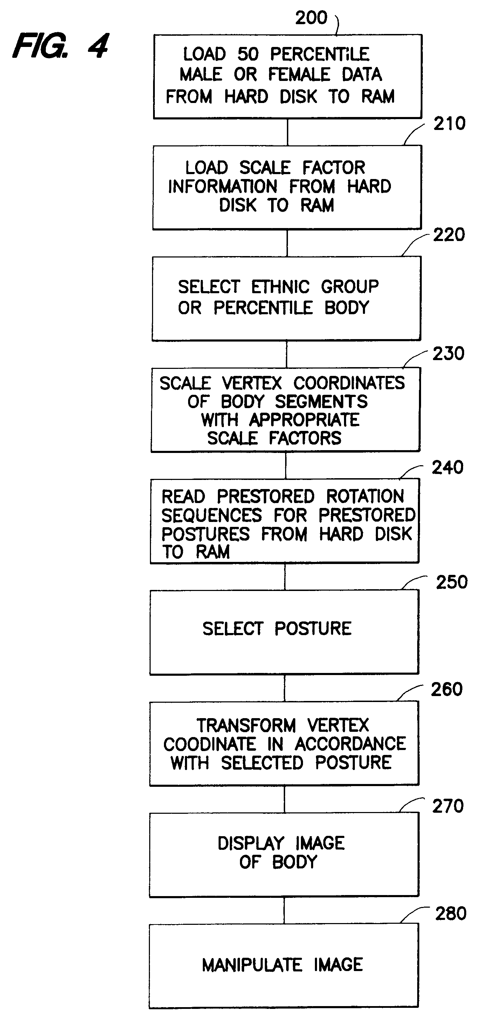

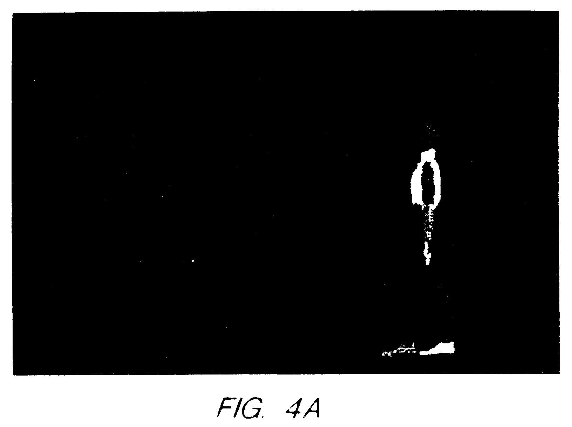

FIG 4 shows the electronic processing steps which are carried out by the central processing unit 112 of FIG 1 to display an anthropometrically accurate image of all or part of a human body on a display screen. Depending on whether the user wishes to display a male or female, the first step is to load the 50 percentile body data (see FIG 3) from the hard disk memory 110 to the local RAM 114 associated with the central processing unit 112 (box 200 of FIG 4). The next step (box 210 of FIG 4) is to load the scale factor information from the hard disk memory to the central processing unit RAM memory. Using an input/output device 116 which may be a keyboard or a mouse, the user selects (box 220 of FIG 4) an ethnic group or percentile body for the image to be displayed. This amounts to the selection of desired scale factors for the image. Using the scaling transformation of equation (1), the central processing unit scales the coordinates of the vertices of the various body segments in accordance with the chosen scale factors (box 230 of FIG 4).

The next step is to load prestored rotation sequences from the hard disk memory to the local RAM of the central processing unit (box 240 of FIG 4). The purpose of these rotation sequences is as follows. The vertices and other data shown in FIG 3 are arranged so that the image of a body produced by this data is in an upright position and facing frontwards. However, in many cases, the user will want the body image to have a different posture.

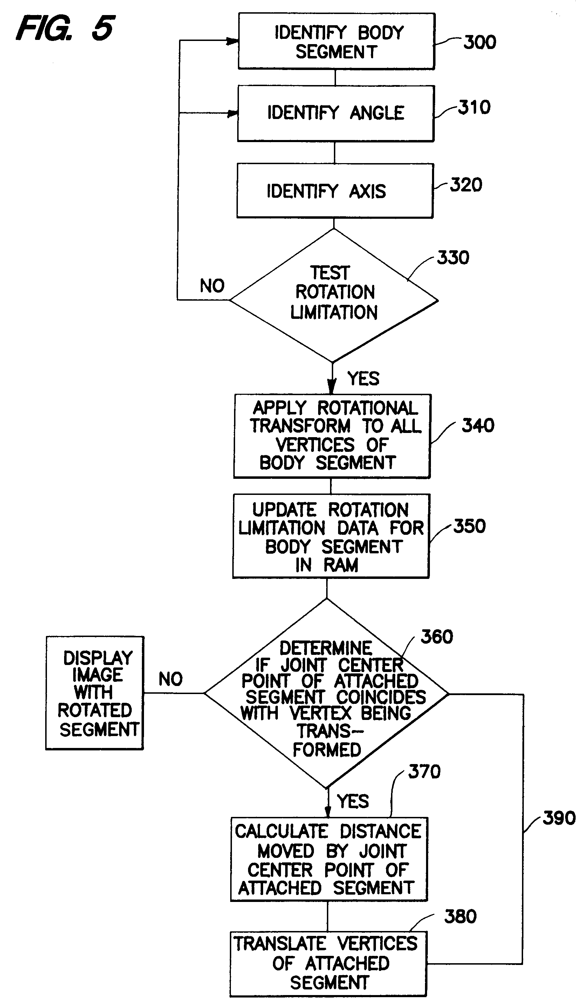

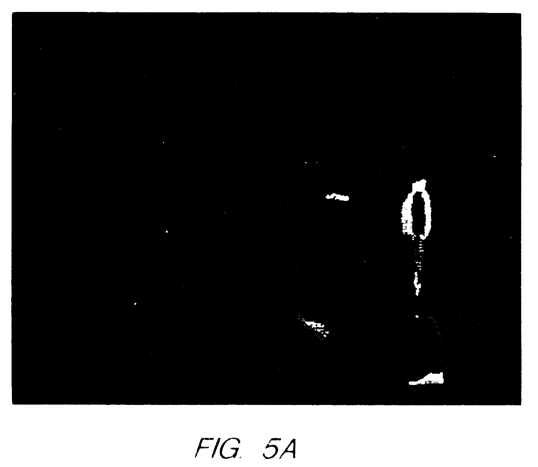

As is shown in detail below, to achieve such a different posture, particular ones of the body segments are rotated through particular angles. These rotations can be carried out under the control of the user, by rotating one segment at a time. (A detailed discussion of an algorithm for carrying out such a rotation is described below in connection with FIG 5). Alternatively, the set of rotations for a plurality of different postures is stored in the hard disk memory and all the user has to do is use the input/output device to select which one of the prestored postures he desires to display on the screen.

Appendix I shows the rotation sequences for each of a plurality of postures. The data of Appendix I may be understood as follows. Rotation sequences for eight different postures are contained in Appendix I. For each such posture, the first column indicates the segment number which runs from 0 to 15 in correspondence with the list of segments provided herein. After each segment three angles are listed indicating rotation around the x-axis, y-axis, and z-axis. Thus, when the user selects a posture, each of the body segments is rotated by the central processing unit about the three axes by the angles listed. Such a rotation is accomplished by applying the rotational transformations indicated above in equations 2,3,4 to the vertices of the various body segments. Note that each posture includes a line 16. Line 16 does not relate to a body segment, but relates to the overall orientation of the body.

For example, in the first posture shown in Appendix I, which is standing straight feet together, none of the segments 0-15 are rotated because standing straight feet together is the posture which the vertices of FIG 3 are arranged to display and this is posture that would be displayed if no rotations of any segments were carried out. However, in line 16 of the first posture of Appendix I, there is a rotation of -90° around the Y-axis. The body is then rotated about the Y-axis -90° so that a side profile of the body is displayed when this posture is selected.

Referring again to FIG 4, once the user selects a posture from a plurality of prestored postures (box 250 of FIG 4), the indicated rotations are carried out by the central processing unit by transforming the vertex coordinates of the various body segments in accordance with the angles of rotation associated with the selected posture (box 260 of FIG 4).

Once all of these transformations of the vertex coordinates are carried out by the central processing unit, the image is displayed on the display 118 (Box 270 of FIG 4).

For example, posture #4 of Appendix I involves placing the displayed human image in a walking position. This is accomplished by rotating segment #5 by -10° about the X-axis, segment 6 by +10° about the X-axis, segment 11 by +10° around the X-axis, segment 14 by -10° around the X-axis, and rotating the whole body by -90° around the Y-axis. The resulting image is shown in FIG 4A.

Now that the user has displayed a human body, the user may wish to manipulate this image (box 280 of FIG 4).

For example, the user may wish to rotate one or more body segments such as for example the right upper arm or left upper leg.

The electronic processing steps carried out by the central processing unit 112 of FIG 1 to rotate such a body segment are discussed in connection with FIG 5. A similar set of electronic processing steps may be used to carry out each of the rotations in the prestored sequences of rotations illustrated in Appendix I.

The first step in a rotation is to identify the body segment to be rotated (box 300 of FIG 5). This may be done by the user through use of an input/output device or the identification of the body segment to be rotated may come from a prestored sequence.

Next, the angle of rotation is identified (Box 310 of FIG 5). This may also be supplied by the user via an input/output device or may be supplied from a prestored sequence.

The next step is to identify the axis of rotation (Box 320 of FIG 5). This may be supplied by a user through use of an input/output device or may come from a prestored sequence.

The next step is to test the rotation limit for the particular body segment, angle, and axis chosen. As indicated previously in connection with FIG 3, the original data base, stored in the hard disk memory and moved to the local RAM memory at the beginning of the display process, contains rotation limitation angles for each of the body segments and for each of the three axes. This data indicates how far each body segment can be rotated from its current position, which is the position the body segment would have in a standing straight posture. Each time a segment is rotated about a given axis, the rotational limit must be updated to indicate the maximum angle of rotation for the segment from its new position. (For example, if in the initial posture a particular segment has a limit of 90° around an axis and this segment is then rotated 30°, the limit must be updated to 60° because the segment can only rotate another 60° about the axis).

Thus, as shown in FIG 5, after a segment, angle, and axis are chosen, the next step is to see if a rotation limitation is violated (Box 330, FIG 5). If there is such a violation, control is returned to box 300 or 310 so the user can select a different rotation. It should be noted, that in the case of prestored rotation sequences, the checking of the rotation limit may be omitted because the prestored rotations are chosen so that they do not violate any rotation limits.

To carry out the rotation, the central processing unit applies the transformation of equation (2), (3) or (4) to the coordinate values of the vertices of the appropriate body segment and stores the transformed coordinate values in the RAM (Box 340 of FIG 5). The next step is to update the rotation limitation for the body segment and store the updated value in the RAM (Box 350 of FIG 5).

The next step (Box 360 of FIG 5) relates to a body segment which is attached to the segment being rotated. The reason this step is carried out is because if one body segment is rotated any body segment attached thereto also moves (for example, if the upper arm is rotated about the shoulder joint point, the lower arm and hand move as well). Thus, the algorithm of FIG 5 includes the step of determining (box 350) if a joint center point of an attached segment coincides with a particular vertex of the segment being rotated. If there is such a joint center point of an attached segment, the distance moved as a result of the rotation by the vertex with which the joint center point coincides is determined by the central processing unit (box 370 of FIG 5). The coordinate values of all of the vertices of the attached segment are then translated by the calculated distance using the translation transformation of equation (1) above (box 380 of FIG 5). As indicated by path 390 of FIG 5, if there is a second attached segment (i.e. another segment attached to the first attached segment), the distance moved by the joint center point of the second attached segment is determined and all vertices of the second attached segment are translated by this distance. When there are no more attached segments, the image is displayed as indicated by the box 400 of FIG 5.

FIG 5A shows how the image of FIG 4A is manipulated by rotating the right upper arm and left upper leg.

Another manipulation which can be performed on the image of FIG 4A is to make this image walk. Each step taken by the human image on the display device can be broken down into nine phases. Each of the phases involves the rotation of various body segments as well as rotation and possibly also translation of the body as a whole. Appendix II lists the transformations which comprise each of the nine phases involved in a walking step. When the transformations of the nine phases are completed, the process starts again from phase #1 to make the image walk another step. The cycling through the nine phases continues until a stop signal is received by the central processing unit. The set of transformations for walking is preferably stored in memory and carried out by the central processing unit. It is not necessary for a user to issue individual commands for the individual rotations.

As shown in Appendix II, each of the phases is described by eighteen lines. Lines 0-15 describe the rotations of the individual body segment about the x,y, and z axes. Line 16 represents rotation of the body as a whole about the x,y, and z axis, and line 17 represents translation. With respect to line 16, a positive number indicates rotation up and a negative number indicates rotation down.

The individual rotations which make up each of the nine phases of Appendix II can be derived as follows. A video tape can be made of an actual person working and the frames of this tape can be studied to determine the angles of the individual body segments during each phase of a step by the human body.

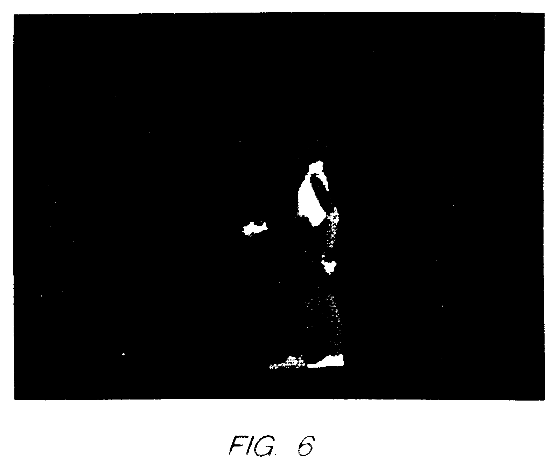

FIG 6 illustrates the image of FIG 4A after two steps have been taken in accordance with the transformations of Appendix II.

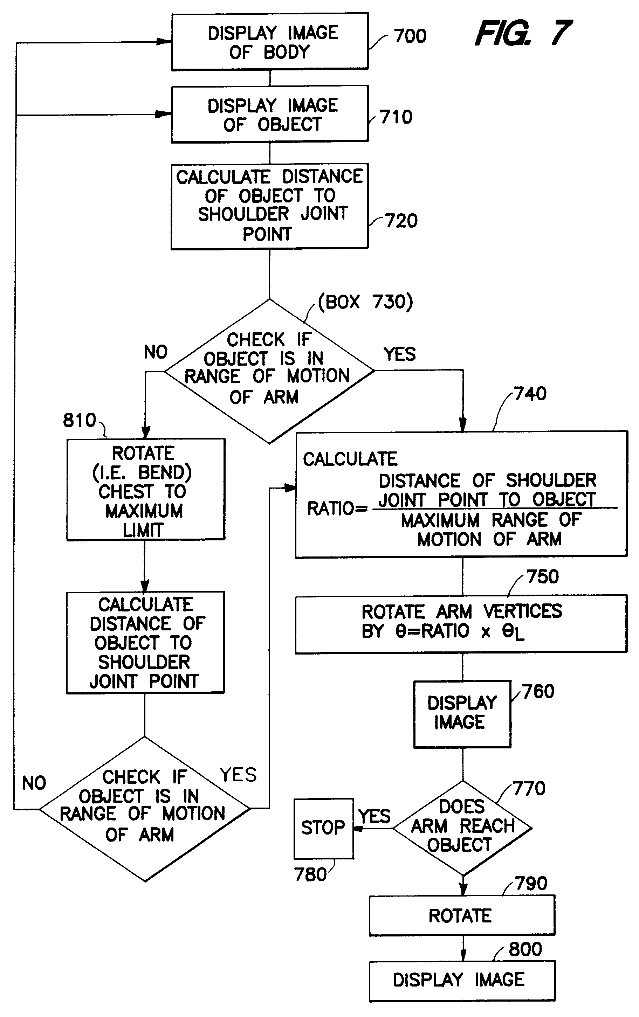

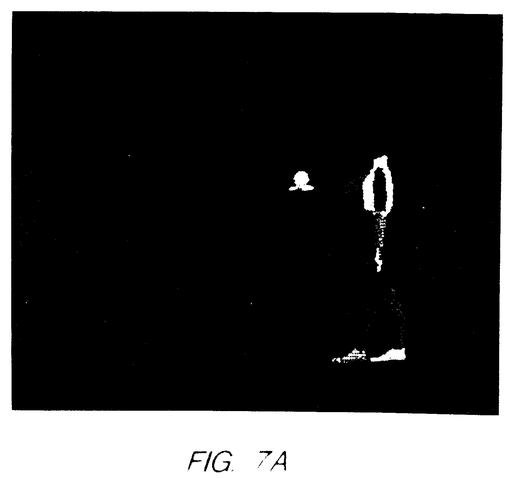

Another manipulation which can be performed on an image of a human body is to determine if a body in a given position can reach an object. The electronic processing steps for manipulating a body to reach for an object are illustrated in the flowchart of FIG 7. Step 700 of FIG 7 comprises displaying a human body in accordance with the inventive method on the display 118 of FIG 1. In addition, through use of conventional CAD techniques, an object can also be displayed (box 710 of FIG 7) on the display 118 of FIG 1.

To determine graphically if the user can reach the body, the distance from the object to a shoulder joint point of the body (box 720 of FIG 7) is calculated electronically by the central processing unit 112 of FIG 1. It is then electronically determined by the central processing unit (box 730) if the object is within the range of motion of the arm (i.e. if the distance from the shoulder joint point to the end of the hand is greater than the distance of the shoulder joint point to the object). If the object is within the range of motion of the arm, the next step is for the central processing unit to electronically calculate the ratio (box 740):

$$\text{ratio} = \frac{\text{distance of object to shoulder joint point}}{\text{maximum range of motion of arm}}$$

The arm is then rotated by $\theta$ = ratio x $\theta_L$ where $\theta_L$ is the limit on the angle of motion of the arm (box 750). This rotation is accomplished through use of the algorithms described above in connection with the flowchart of FIG 5.

The image of the body with the rotated arm is then displayed on the display device 118 (box 760).

If the arm reaches the object (box 770), it is not necessary for further steps to be taken (box 780). However, if the arm does not quite reach the object, the arm may be rotated further (box 790) and the image displayed again (box 800).

Returning now to the box 730, if the object is not in the range of motion of the arm, the chest is bent to the maximum limit (box 810). After the chest is bent, the distance from the object to the shoulder joint point is again calculated by the central processing unit (box 820). If the object is now in the range of motion of the arm, control is returned to box 740. If the object is still not in the range of motion of the arm, the body cannot reach the object and the object or the body has to be translated.

As indicated previously, in addition to displaying images of a human body as a whole, the invention can also be utilized to display and manipulate anthropometrically correct images of the human hand. To accomplish this, as indicated above, the hard disk memory 110 of FIG 1 stores the coordinates of vertices of polyhedron representing each of sixteen segments for each hand.

The sixteen segments for each hand are as follows:

Hand parts number:

1) Thumb (nail, i.e. 5th distal phalange)
2) Thumb (middle, i.e. 5th distal-middle phalange)
3) Thumb (inner, i.e. 5th metacarpus)
4) Forefinger (nail, i.e. 4th distal phalange)
5) Forefinger (middle, i.e. 4th distal-middle phalange)
6) Forefinger (inner, i.e. 4th metacarpus)
7) Index finger (nail, i.e. 3rd distal phalange)
8) Index finger (middle, i.e. 3rd distal-middle phalange)
9) Index finger (inner, i.e. 3rd metacarpus)
10) Ring finger (nail, i.e. 2nd distal phalange)
11) Ring finger (middle, i.e. 2nd distal-middle phalange)
12) Ring finger (inner, i.e. 2nd metacarpus)
13) Pinkie finger (nail, i.e. 1st distal phalange)
14) Pinkie finger (middle, i.e. 1st distal-middle phalange)
15) Pinkie finger (inner, i.e. first metacarpus)
16) Palm

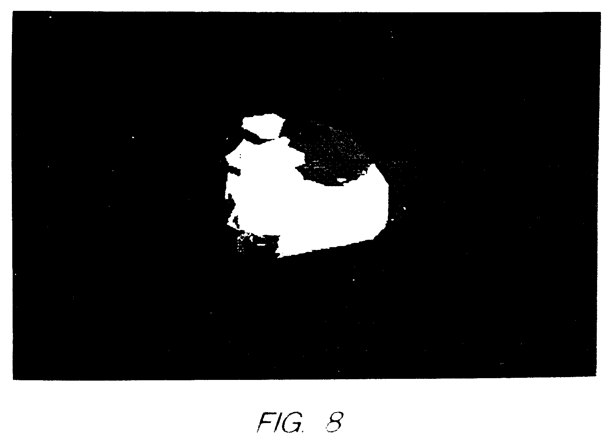

By using the transformations of equations (1)-(4) above on the coordinates of the vertices of the polyhedron representing the various hand segments, an image of the hand on the graphical display 118 can be manipulated into a variety of different postures. Appendix III attached hereto shows illustrative rotations that can be applied to the segments of the hand, starting from a supine posture to achieve various hand postures. For example, the ninth group of rotations in Appendix III puts the hand in a neutral posture with fingers flexed shown in FIG 8.

Finally, the above-described embodiments of the invention are intended to be illustrative only. Numerous alternative embodiments may be devised by those skilled in the art without departing from the spirit and scope of the following claims.

segment #
x axis
y axis
z axis

```
0  0   0   0
1  0   0   0
2  0   0   0
3  0   0   0
4  0   0   0
5  0   0   0
6  0   0   0
7  0   0   0
8  0   0   0
9  0   0   0
10 0   0   0
11 0   0   0
12 0   0   0
13 0   0   0
14 0   0   0
15 0   0   0
16 0  -90  0
```

Appendix I

posture #1

Standing straight, feet together

```
0  0    0   0
1  0    0   0
2  -40  0   0
3  -40  0   0
4  0    0   0
5  -90  0   0
6  -90  0   0
7  -90  0   0
8  -90  0   0
9  90   0   0
10 90   0   0
11 0    0   0
12 0    0   0
13 0    0   0
14 0    0   0
15 0    0   0
16 0   -90  0
```

(posture #2)

sitting

```
0  25   0   0
1  30   0   0
2  -30  0   0
3  -30  0   0
4  0    0   0
5  -30  0   0
6  -30  0   0
7  -60  0   0
8  -60  0   0
9  135  0   0
10 135  0   0
11 -20  0   0
12 0    0   0
13 0    0   0
14 -20  0   0
15 0    0   0
16 0   -90  0
```

(posture #3)

kneeling on two knees

```
0  0    0   0
1  0    0   0
2  0    0   0
3  0    0   0
4  0    0   0
5  -10  0   0
6  10   0   0
7  0    0   0
8  0    0   0
```

(posture #4)

walking position

```
 9 -0  0  0
10  0  0  0
11 10  0  0
12  0  0  0
13  0  0  0
14 -10  0  0
15  0  0  0
16  0 -90  0
 0 35  0  0
 1 15  0  0
 2 -50  0  0
 3 -50  0  0
 4  0  0  0
 5 -95  0  0
 6 -115  0  0
 7 -70 -90  0
 8 -70 90  0
 9 150  0  0
10 120  0  0
11 -20  0  0
12  0  0  0
13  0  0  0
14 -10  0  0
15  0  0  0
16  0 -90  0
 0  5  0  0
 1  5  0  0
 2 -55  0  0
 3 -55  0  0
 4  0  0  0
 5 -40  0  0
 6 -40  0  0
 7 -60 -90  0
 8 -60 90  0
 9  0  0  0
10  0  0  0
11  0  0  0
12  0  0  0
13  0  0  0
14  0  0  0
15  0  0  0
16 40 -90  0
 0  0  0  0
 1 40  0  0
 2 -20  0  0
 3 -20  0  0
 4  0  0  0
 5 -90  0  0
 6 -20  0  0
 7 -65  0  0
 8 -65  0  0
 9 110  0  0
10 135  0  0
11 -20  0  0
12  0  0  0
13  0  0  0
14 -20  0  0
15  0  0  0
16  0 -90  0
 0  0  0  0
```

(posture #5)

Crouching

posture (#6)
bending over

posture #7
kneeling on one knee

12

```
1  0  0  0
2  0  0  0
3  -80  0  0
4  0  0  0
5  -50  0  0
6  0  0  0
7  -10  0  0
8  -10  0  0
9  90  0  0
10  0  0  0
11  -20  0  0
12  0  0  0
13  0  0  0
14  0  0  0
15  0  0  0
16  0  -90  0
```

(posture #8)

reaching out

Appendix II   (Walking)

```
 -1      x  y  z
  0  0   0  0
  1  0   0  0
  2 -15  0  0
  3  15  0  0
  4  0   0  0
  5 -30  0  0
  6  5   0  0
  7 -20  0  0
  8 -10  0  0
  9  0   0  0
 10  15  0  0
 11  5   0  0
 12  0   0  0
 13  0   0  0
 14  3   0  0
 15  0   0  0
 16  0   0  0
 17  1   1  1
  2
  0  0   0  0
  1  0   0  0
  2  0   0  0
  3  20  0  0
  4  0   0  0
  5  14  0  0
  6  8   0  0
  7 -25  0  0
  8  0   0  0
  9  10  0  0
 10  15  0  0
 11 -10  0  0
 12  0   0  0
 13  0   0  0
 14  5   0  0
 15  0   0  0
 16  0   0  0
 17  1   1  1
  3
  0  0   0  0
  1  0   0  0
  2  10  0  0
  3 -30  0  0
  4  0   0  0
  5  16  0  0
  6 -13  0  0
  7  5   0  0
  8  0   0  0
  9 -10  0  0
 10  25  0  0
 11  3   0  0
 12  0   0  0
 13  0   0  0
 14  3   0  0
 15  0   0  0
 16  0   0  0
 17  1   1  1
  4
  0  0   0  0
  1  0   0  0
```

Phase #1

Phase #2

Phase #3

```
 2  10  0  0
 3  -10  0  0
 4   0  0  0
 5   0  0  0
 6  -27  0  0
 7   0  0  0
 8   0  0  0
 9   0  0  0
10  -15  0  0
11   0  0  0
12   0  0  0
13   0  0  0
14  -8  0  0
15   0  0  0
16   0  0  0
17   0  0  0
5.
 0   0  0  0
 1   0  0  0
 2  15  0  0
 3  -10  0  0
 4   0  0  0
 5  10  0  0
 6  -3  0  0
 7  10  0  0
 8  -5  0  0
 9  8.  0  0
10  -17  0  0
11  4  0  0
12   0  0  0
13   0  0  0
14  -8  0  0
15   0  0  0
16   0  0  0
17  1  1  1
 6
 0   0  0  0
 1   0  0  0.
 2  10  0  0
 3  -10  0  0
 4   0  0  0
 5  5  0  0
 6  14  0  0
 7  10  0  0
 8  -5  0  0
 9  12  0  0
10  -3  0  0
11  4  0  0
12   0  0  0
13   0  0  0
14  5  0  0
15   0  0  0
16   0  0  0
17  1  1  1
 7
 0   0  0  0
 1   0  0  0
 2  -30  0  0
 3  30  0  0
 4   0  0  0
```

Phase #4

Phase #5

Phase #6

Phase #7

```
-5  -15  0  0
 6   16  0  0
 7    0  0  0
 8    0  0  0
 9   20  0  0
10  -25  0  0
11    5  0  0
12    0  0  0
13    0  0  0
14    0  0  0
15    0  0  0
16    0  0  0
17    1  1  1
 8
 0    0  0  0
 1    0  0  0
 2  -10  0  0
 3    5  0  0
 4    0  0  0
 5  -30  0  0
 6    0  0  0
 7    0  0  0
 8    0  0  0
 9    5  0  0
10    5  0  0
11   -8  0  0
12    0  0  0
13    0  0  0
14    0  0  0
15    0  0  0
16    0  0  0
17    0  0  0
 9
 0    0  0  0
 1    0  0  0
 2   -5  0  0
 3    5  0  0
 4    0  0  0
 5    0  0  0
 6    5  0  0
 7    0  0  0
 8   10  0  0
 9  -45  0  0
10   15  0  0
11    2  0  0
12    0  0  0
13    0  0  0
14    3  0  0
15    0  0  0
16    0  0  0
17    1  1  1
```

Phase #8

Phase #9

16

Appendix III

```
1
1  0 -40 20
2  0  0  0
3  0  0  0
4 -60  0  0
5 -40  0  0
6  10  0  0
7 -70  0  0
8 -55  0  0
9 -30  0  0
10 -70  0  0
11 -55  0  0
12 -30  0  0
13 -70  0  0
14 -55  0  0
15 -30  0  0
16  20  0  0
2
1  -0  0  0
2  -45  0  0
3  -10  0  0
4  -40  0  0
5  -55  0  0
6  -10  0  0
7  -55  0  0
8  -85  0  0
9  -40  0  0
10 -55  0  0
11 -85  0  0
12 -40  0  0
13 -55  0  0
14 -85  0·0
15 -40  0  0
16   0  0  0
3
1  -0  0 30
2  -18  0  0
3  -13  0  0
4  -60  0  0
5  -20  0  0
6  -12  0  0
7  -85  0  0
8  -70  0  0
9  -45  0  0
10 -85  0  0
11 -75  0  0
12 -50  0  0
13 -85  0  0
14 -75  0  0
15 -50  0  0
16  20  0  0
4
1  -0  0  0
2  -10  0  0
3  -15  0  0
4  -80  0  0
5  -90  0  0
6  -30  0  0
7  -80  0  0
8  -90  0  0
```

```
 9 -45  0   0
10 -80  0   0
11 -85  0   0
12 -40  0   0
13 -80  0   0
14 -82  0   0
15 -30  0   0
16  0   0   0
5
 1 -0   0  -5
 2 -20  0  -5
 3 -15  0   0
 4 -30  0   0
 5 -55  0   0
 6 -14  0   0
 7 -38  0   0
 8 -80  0   0
 9 -30  0   0
10 -60  0   0
11 -80  0   0
12 -30  0   0
13 -60  0   0
14 -80  0   0
15 -30  0   0
16 -25  0   0
6
 1  0  -25 -10
 2  0   0   0
 3  0   0   0
 4 -10  0   0
 5  0   0   0
 6  0   0   0
 7 -60  0  -15
 8 -90  0   0
 9 -80  0   0
10 -75  0  -20
11 -90  0   0
12 -80  0   0
13 -90  0  -20
14 -90  0   0
15 -80  0   0
16 10   0   0
7
 1  0  -15  30
 2  0   0   0
 3 -30  0   0
 4  0   0   0
 5 -20  0   0
 6 -20  0   0
 7 -25  0  -15
 8 -30  0   0
 9 -30  0   0
10 -55  0  -20
11 -70  0   0
12 -50  0   0
13 -80  0  -20
14 -50  0   0
15 -20  0   0
16 20   0  10
8
```

18

```
1  0  0  0
2  0  0  0
3  0  0  0
4  0  0  0
5  0  0  0
6  0  0  0
7  0  0  0
8  0  0  0
9  0  0  0
10 0  0  0
11 0  0  0
12 0  0  0
13 0  0  0
14 0  0  0
15 0  0  0
16 0  0  0
```

9

```
1  -0    0  0
2  -10   0  0
3  -35   0  0
4  -90   0  0
5  -100  0  0
6  -90   0  0
7  -90   0  0
8  -100  0  0
9  -90   0  0
10 -90   0  0
11 -100  0  0
12 -90   0  0
13 -90   0  0
14 -100  0  0
15 -90   0  0
16 0     0  0
```

## Claims

1. A computer aided design method for displaying and manipulating an image of all or part of a human body comprising the steps of

accessing under the control of an electronic processing unit an electronic memory storing the coordinates of a multiplicity of vertices for each of one or more polyhedrons representing in an anthropometrically accurate manner a corresponding human body segment, the coordinates of said vertices being generated by electronic digitization of a real three-dimensional object in the form of all or part of a human body,

electronically displaying on an electronic graphical display device an anthropometrically correct image of one or more segments of a human body utilizing the coordinates stored in said electronic memory, each of said segments being displayed as a polyhedron having a multiplicity of vertices connected by lines to form polygons, and

electronically manipulating said image of said one or more segments of said human body on said graphical display device in response to user signals transmitted from an input-output device to said processing unit by utilizing said processing unit to transform the coordinates of the vertices of the polyhedron representing at least one body segment.

2. The method of claim 1 wherein said memory stores data accurately representing each of a plurality of segments of a first human body having a first set of anthropometric characteristics as a polyhedron having vertices whose coordinates are measured with respect to a joint center point, and wherein said method further comprises the step of scaling the coordinates of said vertices to obtain data representing in an anthropometrically accurate manner each of a plurality of segments of a second human body having a second set of anthropometric characteristics,

whereby said anthropometrically correct image is the image of one or more segments of said second human body.

3. The method of claim 1 wherein said manipulating step comprises rotating on said graphical display one of said body segments in said image around a joint center point by utilizing said processor to apply a rotational transformation to the coordinates of the vertices of the polyhedron representing said one body segment.

4. The method of claim 3 wherein said manipulating step further comprises the step of translating on said graphical display a second body segment attached to said one body segment by utilizing said processor to translate the coordinates of the vertices of the polyhedron representing said second segment.

5. The method of claim 1 wherein said manipulating step comprises graphically translating on said graphical display at least one of said body segments in said image by utilizing said processor to translate the coordinates of the vertices of the polyhedron representing said one body segment.

6. The method of claim 1 wherein said manipulating step comprises applying a scaling transformation to the coordinates of the vertices of the polyhedron representing one of said body segments.

7. The method of claim 1 wherein said data includes anthropometric limits on angles through which said body segments can be rotated about corresponding joint center points.

8. The method of claim 1 wherein said method further comprises the step of displaying an object on said graphics display and said manipulating step comprises determining graphically how said image of said one or more body segments interacts with the image of said object.

9. The method of claim 1 wherein said graphical display is an image of a whole body.

10. The method of claim 1 wherein said data stored in said memory includes the coordinates of a multiplicity of vertices for each of a plurality of polyhedrons representing in an anthropometrically accurate manner a plurality of segments of a human hand.

11. The method of claim 10 wherein said displaying step comprises displaying an anthropometrically correct image of a human hand by displaying each of said segments comprising said human hand as a polyhedron.

12. The method of claim 11 wherein said manipulating step comprises manipulating said image of said human hand.

13. A computer aided design method for displaying and manipulating an image of all or part of a human body comprising the steps of

accessing under the control of a processor an electronic memory storing data representing in an anthropometrically accurate manner each of a plurality of segments of a human body as a polyhedron having a multiplicity of vertices,

utilizing said data stored in said electronic memory for displaying on an electronic graphical display device an anthropometrically correct image of one or more segments of a human body, each of said segments being displayed as a polyhedron having a multiplicity of vertices connected by lines to form polygons, and

electronically controlling said image of said one or more segments of said human body on said graphical display device in response to user signals transmitted from an input-output device to said processor by utilizing said processor to transform the coordinates of the vertices of the polyhedron representing at least one body segment.

**14.** A computer aided design system for displaying and manipulating an image of all or part of a human body comprising

a memory for storing data indicating the coordinates of a multiplicity of vertices for each of one or more polyhedrons representing in an anthropometrically accurate manner a corresponding human body segment,

an electronic graphical display device for utilizing said data stored in said memory to display an anthropometrically correct image of one or more of said segments of a human body, each of said segments being displayed as a polyhedron having a multiplicity of vertices, and

a central processing unit in electronic communication with said memory and said graphical display device for accessing said data stored in said memory to form said image in said graphical display device and for manipulating said image in said graphical display by applying one or more transformations to the data stored in said memory corresponding to the body segments displayed in said image.

**FIG. 1**

EP 0 485 766 A2

FIG. 2B

FIG. 2A

# FIG. 3

BODY SEGMENT #0
JOINT CENTER POINT (0,0,0)

$V_1$ $(X_1, Y_1, Z_1)$

. .

. . LIST OF
VERTICES
. .

. .

VN $(X_N, Y_N, Z_N)$
$F_1$ $V_A \rightarrow V_B \rightarrow V_C$

. .

. . INDEX ORDER
FOR FACES
. .

. .

FM

$(\theta_{Lx}, \theta_{Ly}, \theta_{Lz})$ ROTATION
SEGMENT LENGTH LIMITATIONS
SEGMENT WIDTH

BODY SEGMENT #2

.

.

.

.

.

.

BODY SEGMENT #15
BODY SEGMENT #16

.

.

.

.

.

.

.

BODY SEGMENT #45

.

.

.

.

SCALE FACTORS

**FIG. 4**

200

```
┌─────────────────────────┐
│   LOAD 50 PERCENTILE     │
│   MALE OR FEMALE DATA    │
│  FROM HARD DISK TO RAM   │
└─────────────────────────┘
             │                    210
┌─────────────────────────┐
│   LOAD SCALE FACTOR      │
│  INFORMATION FROM HARD   │
│      DISK TO RAM         │
└─────────────────────────┘
             │                    220
┌─────────────────────────┐
│   SELECT ETHNIC GROUP    │
│   OR PERCENTILE BODY     │
└─────────────────────────┘
             │                    230
┌─────────────────────────┐
│ SCALE VERTEX COORDINATES │
│    OF BODY SEGMENTS      │
│    WITH APPROPRIATE      │
│      SCALE FACTORS       │
└─────────────────────────┘
             │                    240
┌─────────────────────────┐
│  READ PRESTORED ROTATION │
│ SEQUENCES FOR PRESTORED  │
│ POSTURES FROM HARD DISK  │
│        TO RAM            │
└─────────────────────────┘
             │                    250
┌─────────────────────────┐
│     SELECT POSTURE       │
└─────────────────────────┘
             │                    260
┌─────────────────────────┐
│    TRANSFORM VERTEX      │
│ COODINATE IN ACCORDANCE  │
│  WITH SELECTED POSTURE   │
└─────────────────────────┘
             │                    270
┌─────────────────────────┐
│     DISPLAY IMAGE        │
│       OF BODY            │
└─────────────────────────┘
             │                    280
┌─────────────────────────┐
│    MANIPULATE IMAGE      │
└─────────────────────────┘
```

FIG. 4A

**FIG. 5**

IDENTIFY BODY SEGMENT — 300

IDENTIFY ANGLE — 310

IDENTIFY AXIS — 320

TEST ROTATION LIMITATION — 330

NO

YES

APPLY ROTATIONAL TRANSFORM TO ALL VERTICES OF BODY SEGMENT — 340

UPDATE ROTATION LIMITATION DATA FOR BODY SEGMENT IN RAM — 350

DETERMINE IF JOINT CENTER POINT OF ATTACHED SEGMENT COINCIDES WITH VERTEX BEING TRANS-FORMED — 360

DISPLAY IMAGE WITH ROTATED SEGMENT

NO

YES

CALCULATE DISTANCE MOVED BY JOINT CENTER POINT OF ATTACHED SEGMENT — 370

390

TRANSLATE VERTICES OF ATTACHED SEGMENT — 380

FIG. 5A

FIG. 6

# FIG. 7

DISPLAY IMAGE OF BODY — 700

DISPLAY IMAGE OF OBJECT — 710

CALCULATE DISTANCE OF OBJECT TO SHOULDER JOINT POINT — 720

(BOX 730)

CHECK IF OBJECT IS IN RANGE OF MOTION OF ARM — NO / YES

810 — ROTATE (I.E. BEND) CHEST TO MAXIMUM LIMIT

740 — CALCULATE $RATIO = \dfrac{DISTANCE\ OF\ SHOULDER\ JOINT\ POINT\ TO\ OBJECT}{MAXIMUM\ RANGE\ OF\ MOTION\ OF\ ARM}$

CALCULATE DISTANCE OF OBJECT TO SHOULDER JOINT POINT

750 — ROTATE ARM VERTICES BY $\theta = RATIO \times \theta_L$

CHECK IF OBJECT IS IN RANGE OF MOTION OF ARM — NO / YES

760 — DISPLAY IMAGE

770 — DOES ARM REACH OBJECT — YES → STOP (780)

790 — ROTATE

800 — DISPLAY IMAGE

FIG. 7A

FIG. 8